Europäisches Patentamt

European Patent Office

Office européen des brevets

(11) Veröffentlichungsnummer: **0 002 700**
**B1**

(12) **EUROPÄISCHE PATENTSCHRIFT**

(21) Anmeldenummer: **78101605.0**

(22) Anmeldetag: **08.12.78**

(51) Int. Cl.³: **E 06 B 9/02, F 24 J 3/02**

(54) Sonnenkollektor für Wohnhäuser

(30) Priorität: **28.12.77 DE 2758536**

(43) Veröffentlichungstag der Anmeldung:
**11.07.79 Patentblatt 79/14**

(45) Bekanntmachung des Hinweises auf die Patenterteilung:
**07.01.81 Patentblatt 81/01**

(84) Benannte Vertragsstaaten:
**BE CH FR GB IT LU NL SE**

(56) Entgegenhaltungen:
**DE - A - 2 603 811**
**FR - A - 2 353 811**
**US - A - 4 010 731**
**US - A - 4 043 316**
**US - A - 4 055 163**

(73) Patentinhaber: **Schako-Metallwarenfabrik**
**Ferdinand Schad GmbH**
**Zweigniederlassung Kolbingen**
**D - 7201 Kolbingen (DE)**

(72) Erfinder: **Müller, Gottfried**
**Haldenstrasse 12**
**D - 7201 Kolbingen (DE)**
**Hipp, Paul**
**Hauptstrasse**
**D - 7201 Kolbingen (DE)**

(74) Vertreter: **Westphal, Klaus, Dipl.-Ing., et al**
**Seb.-Kneipp-Strasse 14**
**D - 7730 Villingen (DE)**

## Sonnenkollektor für Wohnhäuser

Die Erfindung betrifft einen Sonnenkollektor für Wohnhäuser mit flüssigkeitsdurchströmten, der Sonnenstrahlung aussetzbaren Kanälen.

Sonnenkollektoren zur Ausnützung der Sonnenenergie für Heizzwecke sind in zahlreichen Ausführungsformen bekannt. Diesen Sonnenkollektoren ist gemeinsam, daß sie wasserdurchströmte Kanäle aufweisen, die der Sonnenstrahlung ausgesetzt werden, um das durchströmende Wasser zu erwärmen. Das in den Sonnenkollektoren erwärmte Wasser wird zur Beheizung der Wohnhäuser oder als warmes Brauchwasser verwendet.

Im allgemeinen ist es üblich, die Sonnenkollektoren auf dem Dach oder in der Dachfläche der Wohnhäuser anzubringen. Die Sonnenkollektoren werden dabei vorzugsweise von mäanderförmigen in Rahmen oder Kästen angeordneten Rohrsystemen gebildet, wie dies aus der US-PS 4 055 163 bekannt ist. Die Installation und Montage dieser Sonnenkollektoren ist aufwendig. Die Sonnenkollektoren beeinträchtigen außerdem das architektonische Aussehen der Wohnhäuser erheblich, insbesondere da Große Bereiche der Dachfläche mit Kollektoren bestückt werden müssen, um eine ausreichende Kollektorfläche zu erhalten.

Aus der DE-OS 26 03 811 ist es bekannt, über den Fenstern als Markise ausgebildete, zusammenfaltbare Sonnenkollektoren anzubringen. Bei Sonneneinstrahlung werden diese Kollektor-Markisen auseinandergefaltet, so daß sie einerseits Schatten spenden und andererseits die Sonnenenergie ausnutzen. Die zusammenfaltbare Ausbildung der Sonnenkollektoren bietet jedoch technische Schwierigkeiten, die mit Störungen im Betrieb und einer geringen Lebensdauer verbunden sind.

Aus der US-PS 4 043 316 ist ein Sonnenkollektor bekannt der in die Öffnung des Fensters eingesetzt wird. Nach Art von Klappfensterläden ausgebildete Reflektoren werden zur zusätzlichen Sammlung der Sonnenstrahlen auf den Kollektor ausgenutzt und verringern im geschlossenen Zustand die Wärmeabstrahlung durch das Fenster. Die wirksame Fläche dieser Sonnenkollektoren ist äußerst gering und die fest in die Fensteröffnung eingesetzten Kollektoren verkleinern die Fensterfläche beträchtlich.

Der Erfindung liegt die Aufgabe zugrunde, einen Sonnenkollektor für Wohnhäuser zu schaffen, der in der Herstellung billig ist, der einfach und preisgünstig zu installieren ist und der in einfacher Weise eine für den Bedarf eines Wohnhauses ausreichende Kollektorfläche ermöglicht.

Diese Aufgabe wird erfindungsgemäß dadurch gelöst, daß der Sonnenkollektor als Fensterladen ausgebildet ist.

Die Ausbildung der Sonnenkollektoren als Fensterläden hat gegenüber den herkömmlichen Sonnenkollektoren zwei wesentliche Vorteile Die Installation der Sonnenkollektoren ist äußerst einfach, da diese lediglich anstelle der herkömmlichen Fensterläden eingesetzt werden müssen. Die aufwendigen Umbauarbeiten und Installationsmaßnahmen entfallen, die für die herkömmlichen Dach-Sonnenkollektoren notwendig sind. Weiter können sehr große Kollektorflächen erhalten werden, wenn sämliche Fensterläden eines Gebäudes durch Sonnenkollektor-Läden ersetzt werden.

Es sind verschiedene Ausführungsformen der erfindungsgemäßen Sonnenkollektoren möglich.

Die Kanäle können rechteckigen Querschnitt aufweisen und dicht aneinander anliegen, so daß sie sich zu einer geschlossenen, ebenen Fensterladenfläche zusammenfügen. In dieser Ausführungsform bilden die flüssigkeitsdurchströmten Kanäle selbst den Fensterladen. Die Kanäle bestehen dabei vorzugsweise aus einem unzerbrechlichen, korrosionsfesten Material.

In einfacher Weise wird diese Ausführungsform durch einen flachen geschlossenen Quader in der Form eines Fensterladens realisiert, in welchem die durchströmende Flüssigkeit, vorzugsweise Wasser, mittels eingesetzter Trennwände mäanderförmig geleitet wird, um eine möglichst lange Verweilzeit des Wassers in dem Kollektor zu erhalten.

In einer anderen Ausführungsform ist ein Gehäuse in Form des Fensterladens vorgesehen, in welchem die Kanäle angeordnet sind. Das Gehäuse weist vorzugsweise die Form eines flachen Quaders mit den Abmessungen des Fensterladens auf, wobei die in der Offenstellung des Fensterladens von der Hauswand abgewandte Frontfläche des Gehäuses für die Wärmestrahlung der Sonne durchlässig ist. Die Kanäle können in dieses Gehäuse eingelegte Rohr- oder Schlauchleitungen sein. Auch in dieser Ausführungsform besteht das Gehäuse vorzugsweise aus einem unzerbrechlichen, korrosionsfesten Material.

Die Verwendung eines korrosionsfesten unzerbrechlichen Materials hat den Vorteil, daß die Fensterladen-Kollektoren praktisch wartungsfrei sind. Insbesondere entfällt auf diese Weise auch das bei üblichen Fensterläden notwendige Erneuern des Farbanstrichs.

Die erfindungsgemäßen Fensterladen-Kollektoren dienen in erster Linie zur Erwärmung des durchströmenden Wassers.

Eine weiterer Vorteil ergibt sich jedoch daraus, daß diese Kollektoren eine geschlossene dichte Fensterladenfläche bilden. Werden diese Sonnenkollektor-Fensterläden geschlossen, so verschließen sie die Fensterflächen vollständig, was eine wesentliche Verbesserung der Wärmeisolation des Hauses bedeutet, da die Fensterflächen die größten Wärmeverluste bei der Hausbeheizung verursachen.

Ein zusätzlicher Heizeffekt ergibt sich dadurch, daß die aufgeheizten Sonnenkollektor-Fensterläden im geschlossenen Zustand zusätzlich Strahlungswärme über die Fenster ins Hausinnere abgeben und dadurch zur Beheizung beitragen.

Diese vorteilhafte Wirkung wird in einer besonders zweckmäßigen Ausführungsform dadurch noch gesteigert, daß die in der Offenstellung des Fensterladens der Hauswand zugewandte Rückfläche des Sonnenkollektors zumindest auf der den Kanälen zugekehrten Seite reflektierend ausgebildet ist. Besteht der Fensterladen aus dicht aneinander anliegenden Kanälen, so kann dies durch eine auf die Rückfläche aufgebrachte reflektierende Schicht erreicht werden.

Besteht der Kollektor aus einem Gehäuse, in welches Rohr- oder Schlauchleitungen eingelegt sind, so wird vorzugsweise die Innenseite der Gehäuserückwand mit einer reflektierenden Folie ausgekleidet oder mit einem reflektierenden Anstrich versehen.

In diesen Ausführungsformen bewirkt die reflektierende Rückfläche bei geöffneten Fensterläden eine Verbesserung des Wirkungsgrades der Sonnenkollektoren, da die teilweise durch die wasserdurchströmten Kanäle durchtretende Wärmestrahlung reflektiert wird und ebenfalls ausgenützt werden kann.

Im geschlossenen Zustand der Sonnenkollektor-Fensterläden hat die reflektierende Rückfläche den Vorteil, daß die in dem Kollektor gespeicherte Wärme ausschließlich durch die Fenster ins Hausinnere abgestrahlt werden kann und somit restlos für die Beheizung ausgenützt wird.

Um ein problemloses Öffnen und Schließen der Sonnenkollektor-Fensterläden zu ermöglichen, sind die Kanäle über elastische Zu- und Ableitungen mit einem an oder in der Hauswand angeordneten Rohrsystem verbunden. Dieses Rohrsystem bildet zweckmäßigerweise ein mit einem Sammelbehälter verbundenes Umlaufsystem. Das durch Schwerkraft oder eine Pumpe in dem Umlaufsystem zirkulierende Wasser strömt durch die Fensterladen-Sonnenkollektoren, wird dort erhitzt und gelangt in den Sammelbehälter. Aufgrund der großen Kapazität dieses Sammelbehälters ist es möglich, eine große Wärmemenge zu speichern. Dies ist insbesondere in Zeiten hoher Intensität der Sonneneinstrahlung vorteilhaft, um eine Überhitzung der Sonnenkollektoren zu verhindern, und ermöglicht außerdem auch die Überbrückung von sonnenarmen Zeiträumen.

Der Sammelbehälter kann als Brauchwasserbehälter dienen, dem direkt das für die Warmwasserversorgung des Hauses erforderliche Brauchwasser entnommen wird.

Ebenso kann der Sammelbehälter das Wärmereservoir einer Wärmepumpe bilden, durch welche beispielsweise das Zentralheizungssystem des Gebäudes betrieben wird.

Im folgenden wird die Erfindung anhand eines Ausführungsbeispiels unter Bezugnahme auf die beigefügte Zeichnung näher erläutert. Es zeigen:

Fig. 1 — ein Fenster mit Fensterläden, die gem. der Erfindung als Sonnenkollektoren ausgebildet sind,

Fig. 2 — eine Seitenansicht eines dieser Fensterläden,

Fig. 3 — einen Vertikalschnitt durch ein Haus, das mit erfindungsgemäßen Fensterladen-Sonnenkollektoren ausgestattet ist und

Fig. 4 — eine Seitenansicht dieses Hauses.

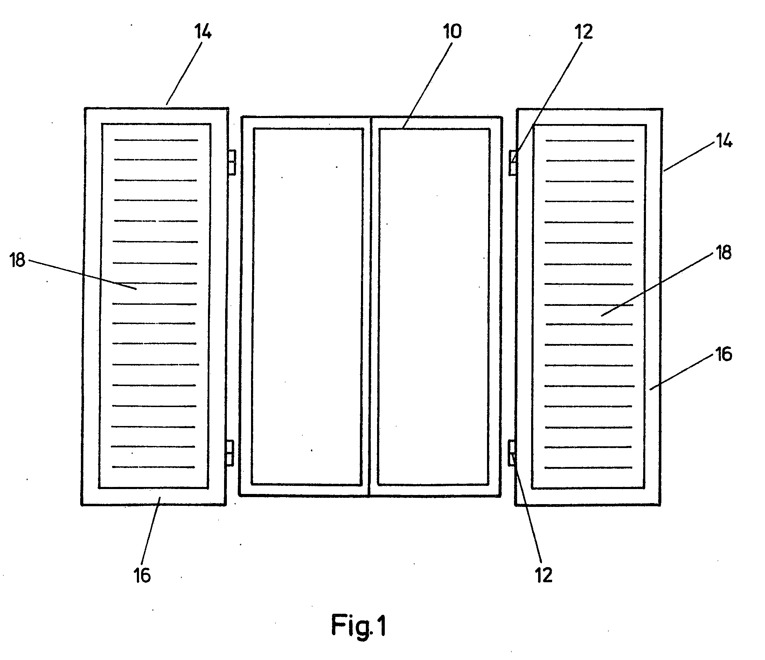

In Fig. 1 ist ein übliches Fenster 10 eines Wohnhauses dargestellt. Zu beiden Seiten des Fensters 10 sind in herkömmlicher Weise mittels Angeln 12 Fensterläden 14 schwenkbar angebracht.

Die Fensterläden 14 bestehen aus einem Gehäuse mit einer durchgehenden geschlossenen Rückwand, die im geöffneten Zustand des Fensterladens, wie er in Fig. 1 dargestellt ist, an der Hauswand anliegt. Die geschlossene Rückwand wird von einem nach vorne überstehenden Rahmen 16 umschlossen, so daß sich ein quaderförmiges Gehäuse mit offener Frontfläche ergibt. Dieses Gehäuse 14 besteht aus einem korrosionsfesten unzerbrechlichen Material. Die Auswahl dieses Materials ist durch die Kosten, die Materialeigenschaften und Architektur des Hauses bestimmt. Vorzugsweise werden Zinkblech, Kupferblech oder eloxiertes Aluminium verwendet.

Die Innenseite des Gehäuses ist wärmeisoliert und mit einer reflektierenden Folie ausgekleidet.

In das Gehäuse sind wasserdurchstömte Kanäle eingesetzt, die in Fig. 1 schematisch mit 18 angedeutet sind. Diese Kanäle können mäanderförmig verlaufende Rohrleitungen oder eine von Kanälen durchzogene Kunststoffmatte oder dgl. sein. Die Ausbildung solcher Kanäle ist von herkömmlichen Sonnenkollektoren bekannt.

Die Frontfläche des Gehäuses ist durch eine Platte abgeschlossen, die beispielsweise aus Acrylglas oder einem sonstigen die Wärmestrahlung des Sonnenlichts durchlassenden Material bestehen kann. Die Platte kann auch aus Metall bestehen und insbesondere auch aus dem Material des Gehäuses, sofern die Platte nur entweder für die Wärmestrahlung des Sonnenlichts durchlässig ist oder diese Strahlung ausreichend stark absorbiert und eine ausreichende Wärmeleitfähigkeit besitzt, um das Innere des Gehäuses und damit die wasserdurchströmten Kanäle ausreichend zu erwärmen.

Die Einzelheiten der Ausbildung der Sonnenkollektoren werden nicht beschrieben, da sie dem Fachmann geläufig sind.

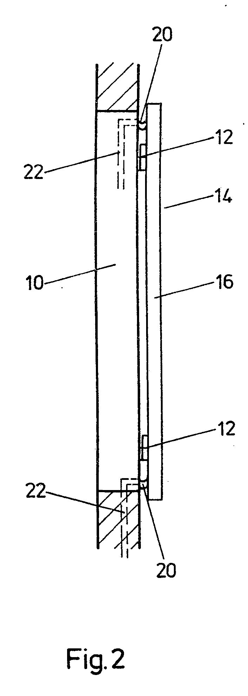

Wie aus Fig. 2 zu erkennen ist, weist der Fensterladen-Sonnenkollektor an seinem oberen Rand einen Einlaß und an seinem unteren Rand einen Auslaß auf, durch den das die Kanäle des Sonnenkollektors durchströmende Wasser zu- bzw. abgeführt wird. Der Einlaß und der Auslaß sind durch elastische Schläuche 20 mit einem Rohrleitungssystem 22 verbunden, das in der Hauswand installiert ist.

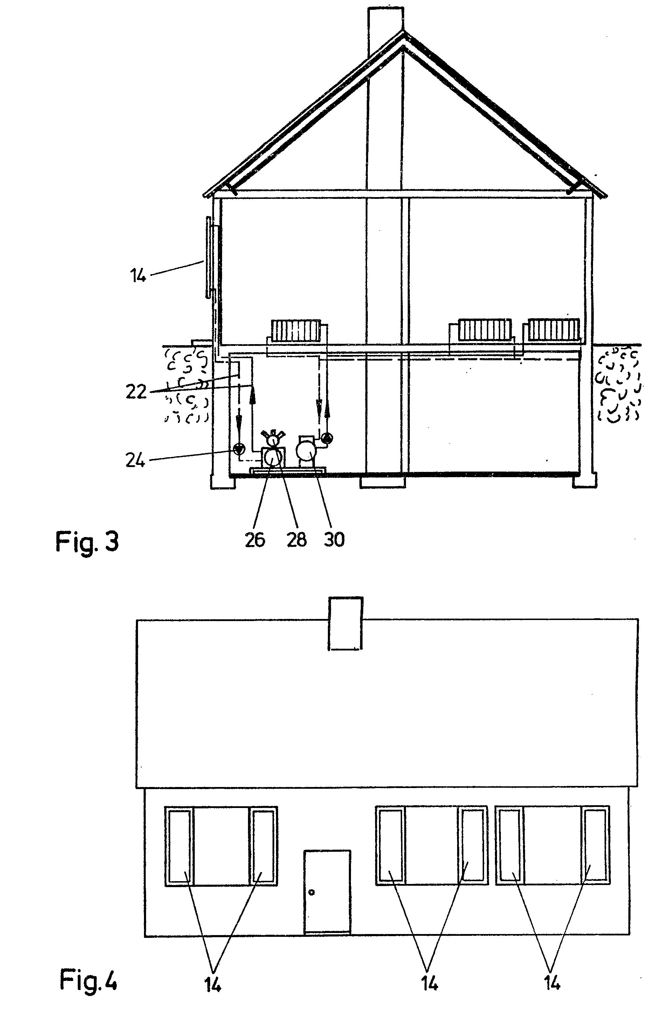

Wie Fig. 3 zeigt, bildet das Rohrleitungssystem 22 ein geschlossenes Umlaufsystem, in welchem das Wasser mittels einer Pumpe 24 zirkuliert. In dieses Umlaufsystem ist ein Sammelbehälter 26 eingeschaltet, in welchen das in dem Fensterladen-Sonnenkollektor 14 erwärmte Wasser gepumpt wird und aus welchem kühles Wasser in den Sonnenkollektor 14 zurückströmt.

Eine Wärmepumpe 28 entzieht dem Sammelbehälter 26 die gespeicherte Wärme und heizt damit das Wasser einer Zentralheizungsanlage 30 auf, die in Fig. 3 schematisch dargestellt ist.

Fig. 4 veranschaulicht die große Sonnenkollektorfläche, die mit den erfindungsgemäßen Fensterladen-Sonnenkollektoren erhalten werden kann. Die in Fig. 4 dargestellte Seite eines kleinen Einfamilienhauses, vorzugsweise die Südseite des Hauses, weist 3 Fenster auf, die mit erfindungsgemäßen Sonnenkollektor-Fensterläden ausgestattet sind. Bei durchschnittlicher Fenstergröße ergeben diese drei Fenster zusammen bereits eine Fensterladenfläche und damit eine Sonnenkollektorfläche von ca. 5 m². Diese Sonnenkollektorfläche reicht aus, um bei günstigem Wetter die gesamte Warmwasserversorgung des Hauses zu übernehmen. Insbesondere in den milderen Jahreszeiten kann auch ein erheblicher Teil der Beheizung des Hauses durch die Sonnenkollektoren übernommen werden.

### Patentansprüche

1. Sonnenkollektor für Wohnhäuser mit flüssigkeitsdurchströmten, der Sonnenstrahlung aussetzbaren Kanälen, dadurch gekennzeichnet, daß der Sonnenkollektor als Fensterladen (14) ausgebildet ist.

2. Sonnenkollektor nach Anspruch 1, dadurch gekennzeichnet, daß die Kanäle (18) rechteckigen Querschnitt aufweisen und dicht aneinander anliegen, so daß sie sich zu einer geschlossenen, ebenen Fensterladenfläche zusammenfügen.

3. Sonnenkollektor nach Anspruch 1, dadurch gekennzeichnet, daß ein Gehäuse (16) in Form des Fensterlands (14) vorgesehen ist, in welchem die Kanäle (18) angeordnet sind.

4. Sonnenkollektor nach Anspruch 3, dadurch gekennzeichnet, daß das Gehäuse (16) die Form eines flachen Quanders aufweist, dessen in der Offenstellung des Fensterladens (14) von der Hauswand abgewandte Frontfläche für die Wärmestrahlung der Sonne durchlässig ist.

5. Sonnenkollektor nach Anspruch 3 oder 4, dadurch gekennzeichnet, daß die Kanäle (18) Rohr- oder Schlauchleitungen sind.

6. Sonnenkollektor nach einem der vorhergehenden Ausprüche, dadurch gekennzeichnet, daß die in der Offenstellung des Fensterladens (14) der Hauswand zugewandte Rückfläche des Sonnenkollektors auf der den Kanälen (18) zugekehrten Seite reflektierend ausgebildet ist.

7. Sonnenkollektor nach einem der vorhergehenden Ansprüche, dadurch gekennzeichnet, daß die Kanäle (18) über elastische Zu- und Ableitungen (20) mit einem an oder in der Hauswand angeordneten Rohrsystem (22) verbunden sind, das als Umlaufsystem an einen Brauchwasserbehälter und/oder ein Wärmereservoir (26) einer Wärmepumpe (28) angeschlossen ist.

### Revendications

1. Capteur solaire pour maisons d'habitation, comportant des conduits parcourus par un liquide et pouvant être exposés au rayonnement solaire, caractérisé en ce que le capteur est réalisé en tant que volet (14) pour fenêtre.

2. Capteur solaire selon la revendication 1, caractérisé en ce que les conduits (18) ont une section rectangulaire et sont disposés côte à côte de sorte qu'ils s'assemblent pour former une surface de volet unitaire et plane.

3. Capteur solaire selon la revendication 1, caractérisé en ce qu'il comprend un carter (16) ayant la forme du volet (14), dans lequel sont disposés les conduits (18).

4. Capteur solaire selon la revendication 3, caractérisé en ce que le carter (16) a la forme d'un parallélépipède plat, dont la surface frontale éloignée du mur de la maison, lorsque le volet (14) est ouvert, est perméable au rayonnement thermique du soleil.

5. Capteur solaire selon la revendication 3 ou la revendication 4, caractérisé en ce que les conduits (18) sont des tubes ou des tuyaux souples.

6. Capteur solaire selon l'une quelconque des revendications précédentes, caractérisé en ce que la surface postérieure, lorsque le volet (14) est ouvert, du capteur solaire, tournée vers le mur de la maison, est réfléchissante sur le côté tourné vers les conduits (18).

7. Capteur solaire selon l'une quelconque des revendications précédentes, caractérisé en ce que les conduits (18) sont reliés à un ensemble de tuyauteries (22) disposé sur ou dans le mur de la maison, par l'intermédiaire de canalisations élastiques d'entrée et de sorte (20), lequel ensemble est raccordé, en tant que circuit de circulation, à un réservoir d'eau pour usage sanitaire et/ou à un réservoir de chaleur (26) d'une pompe à chaleur (28).

### Claims

1. A solar radiation ("sun") collector for dwelling houses with channels traversed by a liquid and which can be exposed to the solar radiation, characterised in that the solar radiation collector is formed as window shutters (14).

2. A solar radiation collector according to Claim 1, characterised in that the channels (18) are of rectangular cross-section and lie closely adjacent one another so as to form a closed, flat window shutter surface.

3 A solar radiation collector according to Claim 1, characterised in that a housing (16) in the form of the window shutter (14) is provided in which the channels (18) are arranged.

4. A solar radiation collector according to Claim 3, characterised in that the housing (16) has the shape of a flat ashlar whose front surface, which faces away from the house wall in the open position of the window shutter (14), is transparent to the thermal radiation from the sun.

5. A solar radiation collector according to Claim 3 or 4, characterised in that the channels (18) are pipes or hoses.

6. A solar radiation collector according to one of the preceding claims, characterised in that the rear surface of the solar radiation collector, which faces the house wall in the open position of the window shutter (14), is made reflecting on the side facing the channels (18).

7. A solar radiation collector according to one of the preceding claims, characterised in that the channels (18) are connected via elastic inlets and outlets (20) to a pipe system (22) arranged on or in the house wall, which is joined as a circulation system to a process water container and/or a heat reservoir (26) of a heat pump (28).

Fig.1

Fig. 2

0 002 700

Fig. 3

Fig. 4